# EUROPEAN PATENT APPLICATION

(11) **EP 4 723 392 A1**
(43) Date of publication of application: **08.04.2026**
(21) Application number: 25205995.1
(22) Date of filing: 01.10.2025
(51) Int. Cl.: H01R 13/52, H01R 43/18, B29C 45/16, B33Y 10/00, B33Y 80/00

(54) **3D PRINTED CONNECTOR WITH INTERLOCKING SEAL**

(30) Priority: 03.10.2024 US 202418905269
(71) Applicant: TE Connectivity Solutions GmbH, 8200 Schaffhausen (CH)
(72) Inventor: LUO, Xiaoming, Middletown, 17057 (US); THACKSTON, Kevin Michael, Middletown, 17057 (US); MORRIS, Andrew, Middletown, 17057 (US)
(74) Representative: Ashton, Gareth Mark

(57) **Abstract**

An electrical connector assembly (10) having a printed housing (12) having a first end (14) and a second end (16). One or more elastomer receiving recesses (20, 28, 36, 44, 44') are provided in the first end, the second end, or both the first end and the second end. Elastomer material (50) is provided in the one or more elastomer receiving recesses. The elastomer is interlocked with the one or more elastomer receiving recesses (20, 28, 36, 44, 44') and the printed housing (12) creating interlocking joints. The interlocking joints between the elastomer material and the housing permanently attach the elastomeric material to the housing.

## Description

The invention relates generally to a connector assembly having a housing with an interlocking seal. In particular, the invention relates to a dielectric housing having an elastomer (such as, but not limited to, silicone rubber) bonded to the housing without the use of an adhesive.

Electrical connector assemblies often have dielectric housings which keep the proper position of contacts inside the connector assembly. The dielectric housings maintain the relative positions of contacts inside the connector assembly, and restrain the movements of electrical connector contacts. Such dielectric housings are often made from polymer, glass, or ceramic materials.

The electrical connector assemblies are often used in environments in which the electrical connector assemblies must be hermetically sealed when mated to a mating connector assembly. In order to provide for the sealing required, an elastomer, such as silicone rubber is bonded to the dielectric housing with an adhesive. However, using an adhesive to bond the elastomer to the housing is time consuming, costly and has a low reliability.

It would, therefore, be beneficial to provide a connector assembly which has an elastomer which is secured to the housing without the use of adhesive. In particular, it would be beneficial to provide a housing with an interlocking elastomer to provide the required sealing.

The solution is provided by an electrical connector assembly having a housing having a first end and a second end. One or more elastomer receiving recesses are provided in the first end, the second end, or both the first end and the second end. Elastomer material is provided in the one or more elastomer receiving recesses. The elastomer is interlocked with the one or more elastomer receiving recesses and the housing creating interlocking joints. The interlocking joints between the elastomer material and the housing permanently attach the elastomeric material to the housing. A method of producing an electrical connector assembly is also provided. The housing may have contact or terminal receiving passages which extend from the first end to the second end.

The invention will now be described by way of example with reference to the accompanying drawings in which:
FIG. 1 is a perspective view of a first illustrative housing of a connector assembly with an interlocking elastomer at either end thereof.
FIG. 2 is a perspective view of the housing of the connector assembly of FIG. 1 with the elastomer removed.
FIG. 3 is a perspective cross sectional view of the housing, taken along line 3-3 of FIG. 2.
FIG. 4 is a perspective cross sectional view of the housing with the interlocking elastomer, taken along line 4-4 of FIG. 1.
FIG. 5 is a perspective view of a second illustrative housing of a connector assembly with an interlocking elastomer removed.
FIG. 6 is a perspective cross sectional view of the housing of FIG. 5, taken along a longitudinal axis of the housing.
FIG. 7 is a perspective cross sectional view of a third illustrative housing of a connector assembly with an interlocking elastomer removed, taken along a longitudinal axis of the housing.
FIG. 8 is a perspective cross sectional view of a fourth illustrative housing of a connector assembly with an interlocking elastomer removed, taken along a longitudinal axis of the housing.

An embodiment is directed to an electrical connector assembly having a printed housing having a first end and a second end. One or more elastomer receiving recesses are provided in the first end, the second end, or both the first end and the second end. Elastomer material is provided in the one or more elastomer receiving recesses. The elastomer is interlocked with the one or more elastomer receiving recesses and the printed housing creating interlocking joints. The interlocking joints between the elastomer material and the housing permanently attach the elastomeric material to the housing.

In an embodiment, the one or more elastomer receiving recesses may include one or more slots. The one or more slots have a T-shape, with narrow portions extending from the first end, the second end, or both the first end and the second end, for example extending perpendicular from the first and/or second end. Wide portions extend from the narrow portion and away from the first end, the second end, or both the first end and the second end, for example extending perpendicular from the first and/or second end. Shoulders are provided where the narrow portions intersect the wide portions. The shoulders extend in a plane which is essentially parallel to the plane of the first end. The first end and the second end may be in parallel planes to one another.

In an embodiment, the one or more slots may positioned proximate an outer circumference of the first end, the second end, or both the first end and the second end. The one or more slots may include a continuous circular slot which extends about the longitudinal axis of the housing. The one or more slots may include a center elastomer or slot positioned along a longitudinal axis of the housing.

In an embodiment, the one or more elastomer receiving recesses may include passages which extend from the first end to the second end. The elastomeric material has a first portion which abuts the first end of the housing, a second portion which abuts the second end of the housing, and a third portion which is provided in the passages.

In an embodiment, the housing may have one or more raised portions which extend from the first end, the second end, or both the first end and the second end. The one or more elastomer receiving recesses being provided in the one or more raised portions. The one or more slots have a C-shape cross-section, with a shoulder which extends in a plane which is essentially parallel to a plane of the first surface.

In an embodiment, the one or more slots have an arcuate shaped cross-section, with a narrow portion extending from the first end, and a wide portion extending from the narrow portion in a direction away from the first end. Projections are provided at the narrow portion, at or proximate the first surface.

In an embodiment, the one or more elastomer receiving recesses may be provided proximate the first end, the second end, or both the first end and the second end. The one or more elastomer receiving recesses are positioned below the surface of the first end, the second end, or both the first end and the second end. At least one opening extends from the one or more elastomer receiving recesses through the of the first end, the second end, or both the first end and the second end.

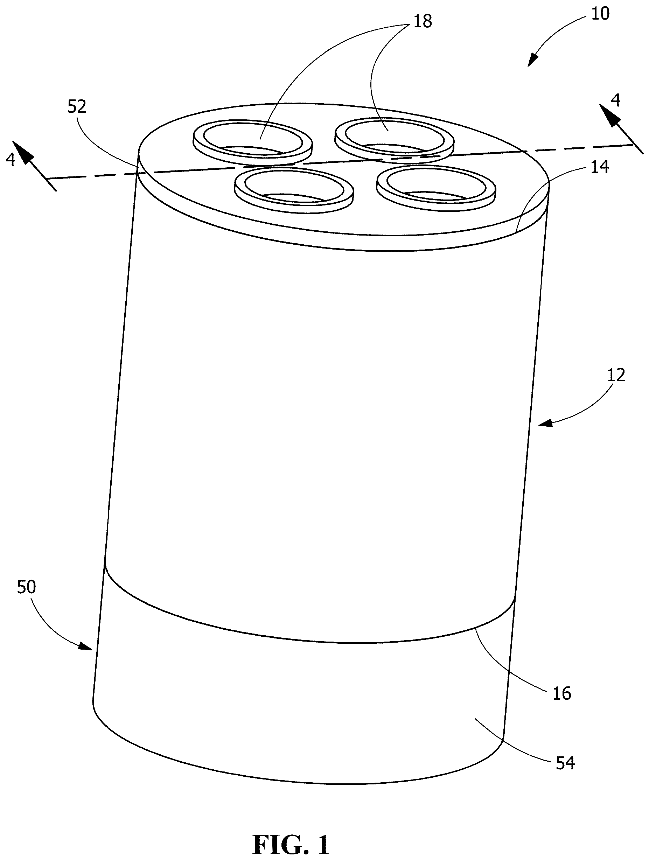

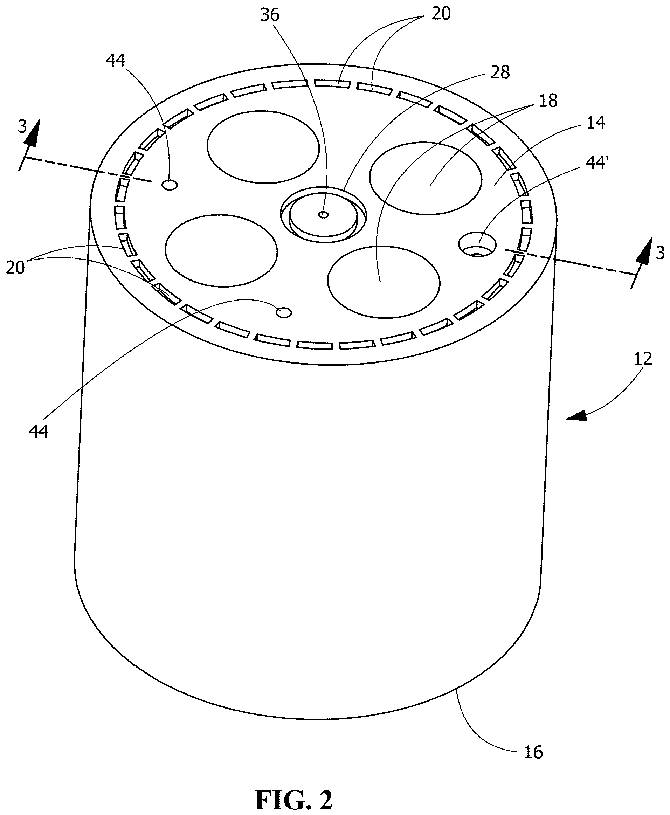

A first illustrative embodiment of an electrical connector assembly 10 is shown in FIGS. 1 through 4. The connector assembly 10 has a housing 12 with a first end 14 and an oppositely facing second end 16. In the embodiment shown, the housing has a cylindrical configuration, but other configurations may be used.

The housing 12 has contact or terminal receiving passages 18 which extend from the first end 14 to the second end 16. The terminals which are positioned in the terminal receiving passages 18 are not shown. In the illustrative embodiment, there are four terminal receiving passages 18, but other configurations and numbers of terminal receiving passages 18 may be used.

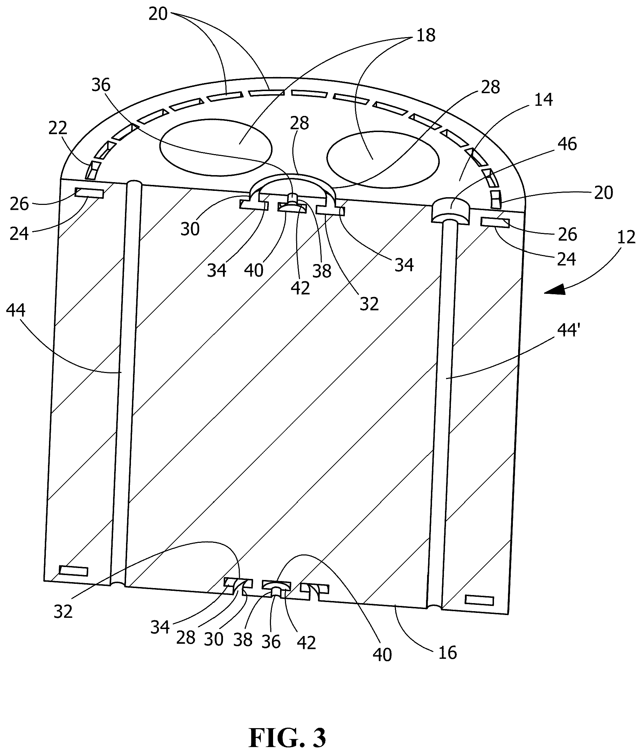

A series of elastomer receiving recesses or slots 20 are provided at either end 14, 16 of the housing 12. In the illustrative embodiment shown, the slots 20 are positioned proximate the outer circumference of the first end 14 and the second end 16. The positioning and number of slots 20 may vary without departing from the scope of the invention. As shown in FIG. 3, each of the slots 20 has a T-shape cross-section, with a narrow portion 22 extending from either the first end 14 or the second end 16 to a wide portion 24. The wide portion 24 extends from the narrow portion 22 in a direction away from either the first end 14 or the second end 16. Shoulders or walls 26 are provided where the narrow portion 22 intersects the wide portion 24.

In the illustrative embodiment, a continuous circular elastomer receiving recess or slot 28 is provided in both the first end 14 and the second end 16. The circular slot 28 extends about the longitudinal axis of the connector assembly 10. Similar to slots 20, when viewed in cross-section, as shown in FIG. 3, the slot 28 has a T-shape, with a narrow portion 30 extending from either the first end 14 or the second end 16. A wide portion 32 extends from the narrow portion 30 in a direction away from either the first end 14 or the second end 16. Shoulders or walls 34 are provided where the narrow portion 30 intersects the wide portion 32. In the illustrative embodiment shown, the narrow portions 22 and 30 have similar dimensions and the wide portions 24 and 32 have similar dimensions. However, in other embodiments the configurations and relative sizes may vary.

In the illustrative embodiment, a center elastomer receiving recess or slot 36 is provided in both the first end 14 and the second end 16. The center slot is positioned along the longitudinal axis of the connector assembly 10. Similar to slots 20, when viewed in cross-section, as shown in FIG. 3, the slot 36 has a T-shape, with a narrow portion 38 extending from either the first end 14 or the second end 16. A wide portion 40 extends from the narrow portion 38 in a direction away from either the first end 14 or the second end 16. Shoulders or walls 42 are provided where the narrow portion 38 intersects the wide portion 40. In the illustrative embodiment shown, the narrow portions 22 and 38 have similar dimensions and the wide portions 24 and 42 have similar dimensions. However, in other embodiments the configurations and relative sizes may vary.

One or more elastomer receiving recesses or passages 44 extend from the first end 14 to the second end 16. In the illustrative embodiment shown, three elastomer receiving passages 44 are shown. One of the elastomer receiving recesses or passages 44' illustrates that the elastomer receiving passages 44 may have an enlarged area 46 provided at or proximate the first end 14, the second end 16, or both.

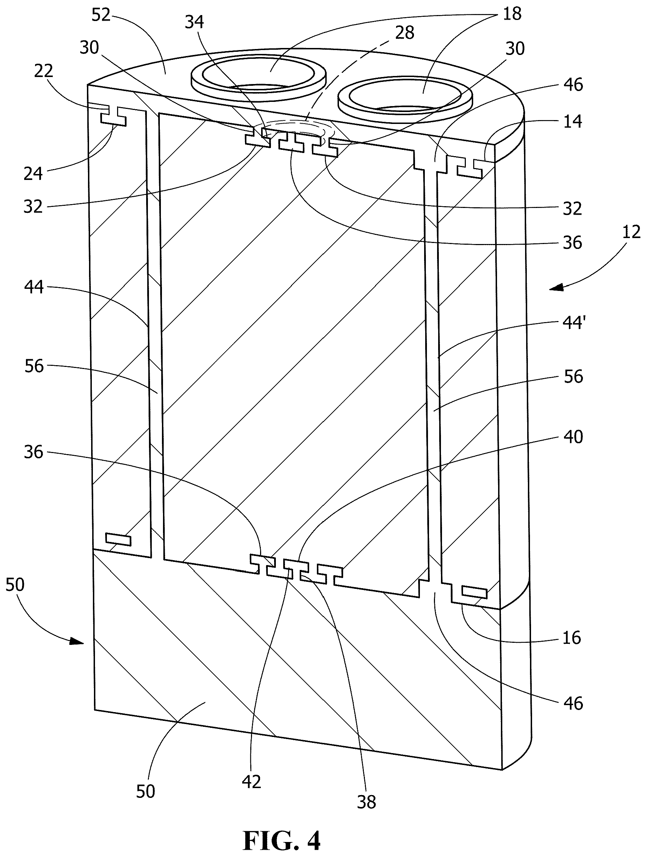

An elastomer material 50 of the connector assembly 10 is shown in FIGS. 1 and 4. In the embodiment shown, the elastomer material 50 is a silicone rubber, but other types of materials which can be used as a seal may be used. A first portion 52 of the elastomer material 50 abuts the first end 14 of the housing 12. A second portion 54 of the elastomer material 50 abuts the second end 16 of the housing 12. A third portion 56 of the elastomer material 50 is provided in the elastomer receiving passages 44, 44' and extends from the first portion 52 to the second portion 54.

The housing 12 is produced using an additive manufacturing process, such as 3D printing. This allows the wide portions 24, 32, 40, which are spaced from the ends 14 and 16 of the housing to have flat shoulders or walls 26, 34, 42 which are provided below the ends 14 and 16. The flat shoulders or walls 26, 34, 42 extend in a plane which is essentially parallel to the planes of the first end 14 and the second end 16.

With the housing 12 complete, the elastomer material 50 is over-molded over the housing 12. During the over-molding process, the elastomer material 50 flows into the slots 20, the circular slot 28 and the center slot 36 at both the first end 14 and the second end 16 of the housing 12. The elastomer material 50 flows into the narrow portions 22, 28, 38 and the wide portions 24, 32, 40. As the elastomer material 50 cools and solidifies, the elastomer material 50 is captured in the slots 20, the circular slot 28 and the center slot 36 by the configuration of the shoulder or walls 26, 34, 42, thereby creating interlocking joints. This allows the elastomer material 50 and the housing 12 to create a single piece without the need of adhesive or the other material. The first portion 52 and the second portion 54 of the elastomer material 50 are permanently attached to the housing 12 to provide hermetic sealing as the connector assembly 10 is mated with a mating connector assembly.

In the illustrative embodiment shown, the elastomer material 50 also flows into the elastomer receiving passages 44, 44' to form the third portion 56. As the elastomer material 50 cools and solidifies, the elastomer material 50 captured in the elastomer receiving passages 44, 44' joins and is integrally attached to the first portion 52 and the second portion 54. This allows the first portion 52, the third portion 56 and the second portion 54 to form a single piece seal, thereby increasing the joining strength and further ensuring that the first portion 52 and the second portion 54 of the elastomer material 50 are permanently attached to the housing 12 without the use of adhesive to provide the hermetic sealing of the connector assembly 10.

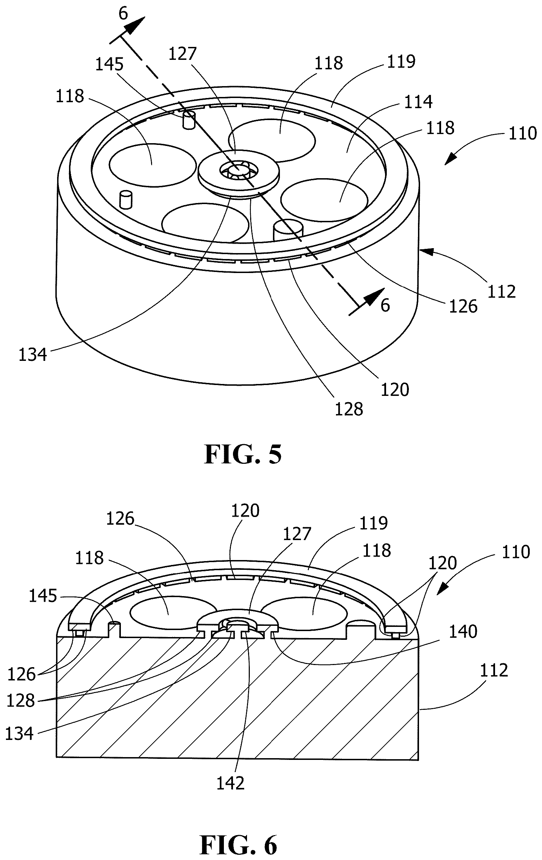

A second illustrative embodiment of an electrical connector assembly 110 is shown in FIGS. 5 and 6. The connector assembly 10 has a housing 112 with a first end 114 and an oppositely facing second end (not shown). In the embodiment shown, the housing has a cylindrical configuration, but other configurations may be used.

The housing 112 has contact or terminal receiving passages 118 which extend from the first end 114 to the second end 116. The terminals which are positioned in the terminal receiving passages 118 are not shown. In the illustrative embodiment, four terminal receiving passages 118, but other configurations and numbers of terminal receiving passages 118 may be used.

A first raised portion 119 extends from the first end 114. Elastomer receiving recesses or slots 120 are provided on either side of the raised portion 119. In the illustrative embodiment shown, the first raised portion 119 and the slots 120 are positioned proximate the outer circumference of the first end 14. As shown in FIG. 6, each slot 120 has a C-shape, with a shoulder or wall 126 which extends in a plane which is essentially parallel to a plane of the first surface 114. Although not shown, a similar raised portion may be provided on the second end of the housing.

In the illustrative embodiment, a second raised circular portion 127 is provided at the first end 114. Elastomer receiving recesses or slots 128 are provided on either side of the second raised portion 127. The second raised portion 127 and the slots 128 extend about the longitudinal axis of the connector assembly 110. Similar to slots 120, when viewed in cross-section, as shown in FIG. 6, each slot 128 has a C-shape, with a shoulder or wall 134 which extends in a plane which is essentially parallel to a plane of the first surface 114. Although not shown, a similar raised portion may be provided on the second end of the housing.

One or more projections 145 extend outward from the first end 114. One or more projections many also extend outward from the second end.

As previously stated with respect to the first illustrative embodiment, the housing 112 is produced using an additive manufacturing process, such as 3D printing. This allows the shoulders or walls 126, 134 to extend in a plane which is essentially parallel to the planes of the first end 14 and the second end.

With the housing 112 complete, the elastomer material is over-molded over the housing 112. During the over-molding process, the elastomer material flows into the slot 120 and slot 128. As the elastomer material cools and solidifies, the elastomer material is captured in the slots 120, 128 by the configuration of the shoulder or walls 126, 134 thereby creating interlocking joints. This allows the elastomer material and the housing 112 to create a single piece without the need of adhesive or the other material. The elastomer material is permanently attached to the housing 112 to provide hermetic sealing.

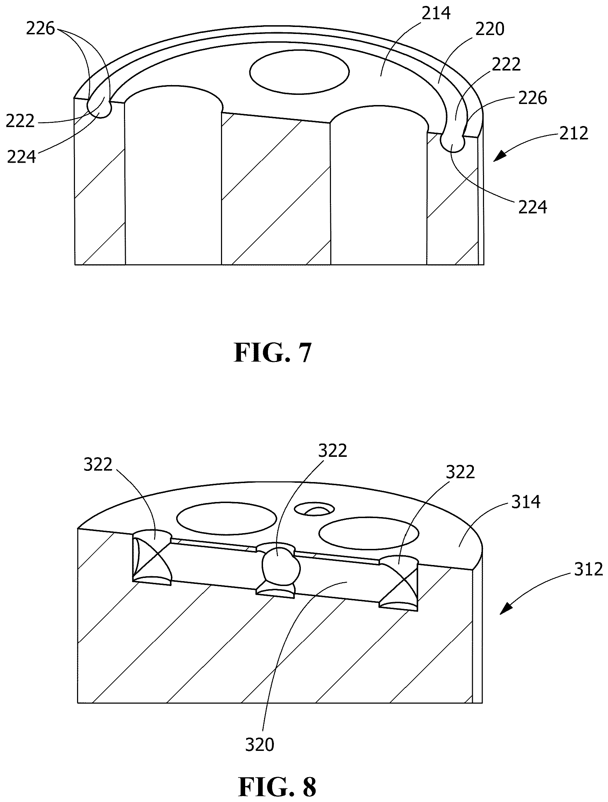

A third illustrative embodiment is shown in FIG. 7. In this embodiment, an elastomer receiving recess or slot 220 is provided in the first end 214 of the housing 212. The slot 220 is positioned proximate the outer circumference of the first end 114. The slot 220 has an arcuate cross-sectional shape, with a narrow portion 222 extending from the first end 14. A wide portion 224 extends from the narrow portion 22 in a direction away from the first end 14. Shoulders or projection 226 are provided at the narrow portion 222 proximate the first surface 114. A similar slot may be provided in the second end of the housing 212.

As previously stated with respect to the first illustrative embodiment, the housing 212 is produced using an additive manufacturing process, such as 3D printing. This allows the shoulders or projections 226 to project into a plane which is essentially parallel to the planes of the first end 114 and the second end.

With the housing 212 complete, the elastomer material is over-molded over the housing 212. During the over-molding process, the elastomer material flows into the slot 220. As the elastomer material cools and solidifies, the elastomer material is captured in the slot 220 by the configuration of the shoulder or projection 226 thereby creating interlocking joints. This allows the elastomer material and the housing 212 to create a single piece without the need of adhesive or the other material. The elastomer material is permanently attached to the housing 212 to provide hermetic sealing.

A fourth illustrative embodiment is shown in FIG. 8. In this embodiment, an elastomer receiving recess or channel 320 is provided proximate the first end 314 of the housing 312. The channel 320 is positioned below the surface of the first end 114. A longitudinal axis of the channel 320 extends in a plane which is essentially parallel to the plane of the first end 314. At least one opening 322 extends from the channel 320 through the first end 314. In the illustrative embodiment shown, three openings 322 are provided, but other numbers and configurations may be used. A similar channel and openings may be provided in the second end of the housing 312.

As previously stated with respect to the first illustrative embodiment, the housing 312 is produced using an additive manufacturing process, such as 3D printing. This allows the channel 320 to be formed in the interior of the housing 312 and to project into a plane which is essentially parallel to the planes of the first end 314 and the second end.

With the housing 312 complete, the elastomer material is over-molded over the housing 312. During the over-molding process, the elastomer material flows into the channel 320 through the at least one opening 322. As the elastomer material cools and solidifies, the elastomer material is captured in the channel 320 thereby creating interlocking joints. This allows the elastomer material and the housing 312 to create a single piece without the need of adhesive or the other material. The elastomer material is permanently attached to the housing 312 to provide hermetic sealing.

## Claims

1. An electrical connector assembly (10) comprising:
a printed housing (12) having a first end (14) and a second end (16);
one or more elastomer receiving recesses (20, 28, 36, 44, 44') provided in the first end (14), the second end (16), or both the first end and the second end;
elastomer material (50) provided in the one or more elastomer receiving recesses (20, 28, 36, 44, 44'), the elastomer (50) being interlocked with the one or more elastomer receiving recesses (20, 28, 36, 44, 44') and the printed housing (12) creating interlocking joints;
wherein the interlocking joints between the elastomer material (50) and the printed housing (12) permanently attach the elastomeric material to the housing.

2. The electrical connector assembly as recited in claim 1, wherein the one or more elastomer receiving recesses include one or more slots (20, 28, 36).

3. The electrical connector assembly as recited in claim 2, wherein the one or more slots (20, 28, 36) have a T-shape, with narrow portions (22, 30, 38) extending from the first end, the second end, or both the first end and the second end, and wide portions (24, 32, 40) extending from the narrow portion.

4. The electrical connector assembly as recited in claim 3, wherein shoulders (26, 34, 42) are provided where the narrow portions (22, 30, 38) intersect the wide portions (24, 32, 40).

5. The electrical connector assembly as recited in claim 4, wherein the shoulders (26, 34, 42) extend in a plane which is essentially parallel to the plane of the first end (14).

6. The electrical connector assembly as recited in claim 2 or any claim dependent thereon, wherein the one or more slots are positioned proximate an outer circumference of the first end, the second end, or both the first end and the second end.

7. The electrical connector assembly as recited in claim 5, wherein the one or more slots include a continuous circular slot (28; 220) which extends about the longitudinal axis of the housing (12; 212).

8. The electrical connector assembly as recited in claim 2 or any claim dependent thereon, wherein the one or more slots include a center elastomer receiving recess or slot (36) positioned along a longitudinal axis of the housing (12).

9. The electrical connector assembly as recited in any preceding claim, wherein the elastomeric material (50) has a first portion (52) which abuts the first end (14) of the housing and a second portion (54) which abuts the second end (16) of the housing.

10. The electrical connector assembly as recited in any preceding claim, wherein the elastomeric material (50) is a silicone rubber.

11. The electrical connector assembly as recited in any preceding claim, wherein the one or more elastomer receiving recesses are passages (44, 44') that extend from the first end (14) to the second end (16).

12. The electrical connector assembly as recited in claim 11, wherein the elastomeric material (50) has a first portion (52) which abuts the first end (14) of the housing, a second portion (54) which abuts the second end (16) of the housing, and a third portion (56) which is provided in the passages (44, 44').

13. The electrical connector assembly as recited in any preceding claim, wherein the housing (112) has a first raised portion (119) which extends from the first end (114), the second end, or both the first end and the second end, the one or more elastomer receiving recesses (120) provided in the first raised portion (119), wherein the first raised portion (119) and the one or more elastomer receiving recesses (120) are optionally positioned proximate the outer circumference of the housing.

14. The electrical connector assembly as recited in claim 13, wherein the one or more slots (120) have a C-shape, with a shoulder (126) which extends in a plane which is essentially parallel to a plane of the first surface.

15. A method of producing an electrical connector assembly (10), comprising:
printing a housing (12) by additive manufacturing, the printed housing having a first end (14) and a second end (16); and one or more elastomer receiving recesses (20, 28, 36, 44, 44') provided in the first end, the second end, or both the first end and the second end; and
over-molding an elastomer material (50) over the housing (12), the elastomer flowing into the one or more elastomer receiving recesses (20, 28, 36, 44, 44') to create interlocking joints that interlock the elastomer (50) with the printed housing (12),
wherein the electrical connector assembly is optionally the electrical connector assembly of any preceding claim.
